# EUROPÄISCHE PATENTSCHRIFT

(11) **EP 2 708 427 B1**
(45) Veröffentlichungstag und Bekanntmachung des Hinweises auf die Patenterteilung: **01.03.2017**
(21) Anmeldenummer: 13004377.1
(22) Anmeldetag: 07.09.2013
(51) Int. Cl.: B60S 5/06, B62D 25/20, B62D 31/02, B60K 1/04

(54) **Fahrzeug-Boden zur Aufnahme von Batterie-Modulen**
Vehicle floor for receiving battery modules
Plancher de véhicule pour la réception de modules de batterie

(30) Priorität: 14.09.2012 DE 102012108588
(43) Veröffentlichungstag der Anmeldung: 19.03.2014
(73) Patentinhaber: Stadler Altenrhein AG, 9423 Altenrhein (CH)
(72) Erfinder: Löhr, Valentin, D-88131 Lindau (DE)
(74) Vertreter: Hepp Wenger Ryffel AG

(56) Entgegenhaltungen:
- EP-A2- 2 463 162
- WO-A2-2012/091404
- US-A1- 2004 134 699
- US-A1- 2012 161 472

## Beschreibung

Die Erfindung betrifft eine aus einer Mehrzahl von Boden-Elementen zusammengesetzte Boden-Vorrichtung eines Fahrzeuges für den Personentransport.

Boden-Vorrichtungen der eingangs genannten Art werden im Stand der Technik verwendet, um eine Plattform zum Anbringen einer Fahrgastzelle eines Fahrzeuges für den Personentransport zu bilden. Die bekannten Vorrichtungen weisen indes den Nachteil auf, dass sie für eine niederflurige Unterbringung von Energiespeichermodulen zum Antrieb des Fahrzeuges nicht geeignet sind.

Um eine niederflurige Bauweise zu ermöglichen, ist es aus dem Stand der Technik bekannt, Energiespeichermodule zum Antrieb eines Fahrzeuges unterhalb der im Inneren der Fahrgastzelle angeordneten Sitze zu installieren. Derartige Konstruktionen weisen indes einerseits den Nachteil einer Minderung des Fahrzeuginnenraumes insbesondere unterhalb der Sitze auf und Verhindern andererseits einen Austausch der Energiespeichermodule ausschließlich von nur einer Fahrzeugseite her, wodurch die Zeit für einen derartigen Austausch länger ist als bei einem von nur einer Fahrzeugseite ermöglichten Austausch.

Aus der gattungsgemäßen WO2012/091404 ist ein Fahrzeug -Unterboden bekannt, in den Batteriemodule zwischen Querträgern eingefügt werden können.

Aufgabe der Erfindung ist es deshalb, eine Boden-Vorrichtung für Fahrzeuge für den Personentransport zu schaffen, bei der eine niederflurige Unterbringung von Energiespeichermodulen ermöglicht ist.

Die Aufgabe wird durch eine Boden-Vorrichtung nach Anspruch 1 gelöst.

Für eine Boden-Vorrichtung der eingangs genannten Art wird diese Aufgabe erfindungsgemäß dadurch gelöst, dass ein Boden-Element als im Wesentlichen hohlquaderförmig geformtes robustes Bodenstrukturelement ausgebildet ist, das strukturiert ist, um eine Mehrzahl von Einzelparzellen zur positionsfixierten Aufnahme jeweils eines flachquaderförmig ausgebildeten Energiespeichermoduls aufzuweisen, wobei die Mehrzahl von Energiespeichermodulen jeweils über eine seitliche Öffnung reversibel in das Innere des Bodenstrukturelementes einbringbar sind.

Bevorzugte Ausführungsformen der Erfindung sind Gegenstand der Unteransprüche.

Bei der erfindungsgemäßen Boden-Vorrichtung wird durch die Merkmalskombination, dass ein Boden-Element als im Wesentlichen hohlquaderförmig geformtes robustes Bodenstrukturelement ausgebildet ist, das strukturiert ist, um eine Mehrzahl von Einzelparzellen zur positionsfixierten Aufnahme jeweils eines flachquaderförmig ausgebildeten Energiespeichermoduls aufzuweisen, wobei die Mehrzahl von Energiespeichermodulen jeweils über eine seitliche Öffnung reversibel in das Innere des Bodenstrukturelementes einbringbar sind, eine niederflurige Bauweise erreicht, bei der ein gegenüber dem Stand der Technik schnellerer Austausch der Energiespeichermodule ausschließlich von nur einer Fahrzeugseite her ermöglicht ist. Dabei ist jede der beiden Fahrzeugseiten des betreffenden Fahrzeuges für einen Austausch der Energiespeichermodule geeignet.

Die erfindungsgemäße Vorrichtung fördert insofern den Einsatz standardisierter Energiespeichermodule.

Gemäß der Erfindung ist vorgesehen, dass das Bodenstrukturelement zwei oder mehr zueinander parallel angeordnete und in Längsrichtung des Fahrzeuges orientierte Langträger enthält, die über eine Mehrzahl von zueinander parallel angeordneter und senkrecht zu den Langträgern orientierter Querträger miteinander verbunden sind.

Gemäß der Erfindung ist vorgesehen, dass die Langträger und Querträger eine robuste Rahmenkonstruktion bilden, wobei die Querträger beabstandet sind, um zwischen jeweils zwei benachbarten Querträgern eine Parzelle zur Aufnahme eines Energiespeichermoduls auszubilden, und wobei in den Langträgern schlitzartige Zugangsöffnungen zum Einsetzen oder Herausnehmen jeweiliger Energiespeicher-module ausgebildet sind.

Ein Energiespeichermodul ist vorzugsweise langschmal ausgebildet und weist dabei zwei gegenüber den Seitenflächen verkürzte Stirnflächen auf, wobei in einem mittleren Bereich der jeweiligen Seitenflächen jeweils ein elektrisches Kontaktelement vorgesehen ist, das bei positionsfixierter Lage des Energiespeichermoduls in einer Parzelle an ein im mittleren Bereich eines Querträgers angeordnetes, mit einem Stromkreislauf des Fahrzeuges verbundenes Querträger-Kontaktelement angrenzt.

In einem jeweiligen Endbereich eines Querträgers kann vorzugsweise ein Hohlraum zum Anbringen eines Antriebs einer seitlichen Verschließklappe zum reversiblen Verschließen einer schlitzartigen Zugangsöffnung eines Langträgers ausgebildet sein.

Gemäß einer weiteren bevorzugten Ausführungsform der erfindungsgemäßen Vorrichtung ist vorgesehen, dass die von den Lang- und Querträgern gebildete Rahmenkonstruktion mit einem Oberpaneel und einem Unterpaneel versehen ist, um einen eine Mehrzahl allseitig umschlossener Parzellen aufweisenden Quasi-Hohlquader zu bilden, wobei sowohl in dem Oberpaneel als auch in dem Unterpaneel im Bereich der Querträger-Kontaktelemente Aussparungen zum Führen elektrischer Leitungen vorgesehen sind.

Des Weiteren kann ein Unterpaneel vorzugsweise eine Oberplatte und eine Unterplatte enthalten, die über eine Wabenkonstruktion miteinander verbunden sind. Die Waben sind dabei vorzugsweise als parallel zu den Langträgern ausgerichtete röhrenartige Hohlkammern zum Einbringen von Fluidleitungen zum Führen von Kühlflüssigkeit zum Kühlen der Energiespeichermodule und/oder zum Einbringen elektrischer Leiter ausgebildet.

In ähnlicher Weise enthält ein Oberpaneel vorzugsweise ebenfalls eine Oberplatte und eine Unterplatte, die über eine Wabenkonstruktion miteinander verbunden sind, wobei die Waben der Oberplatte indes als senkrecht zu den Hohlkammern des Unterpaneels ausgerichtete röhrenartige Hohlkammern ausgebildet sind.

Im Sinne einer dauerhaften, robusten Ausgestaltung ist ein Bodenstrukturelement grundsätzlich aus einem Metall, insbesondere Aluminium hergestellt, wobei sich eine Aluminium-Strangpress-Profilbauweise bewährt hat.

Die erfindungsgemäße Vorrichtung wird im Folgenden anhand einer bevorzugten Ausführungsform erläutert, die in den Figuren der Zeichnung dargestellt ist. Darin zeigen:
- Fig. 1: eine bevorzugte Ausführungsform eines Bodenstrukturelementes der erfindungsgemäßen BodenVorrichtung in einer Seitenansicht;
- Fig. 2: die in Fig. 1 dargestellte bevorzugte Ausführungsform des Bodenstrukturelementes in einer Ansicht von schräg oben.
- Fig. 3: die in Fig. 1 dargestellte bevorzugte Ausführungsform des Bodenstrukturelementes in einer Explosionsansicht von schräg oben.

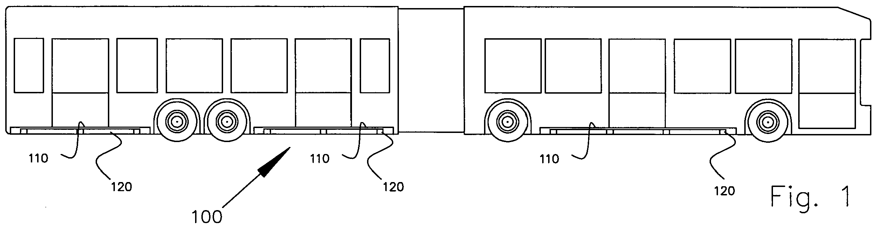

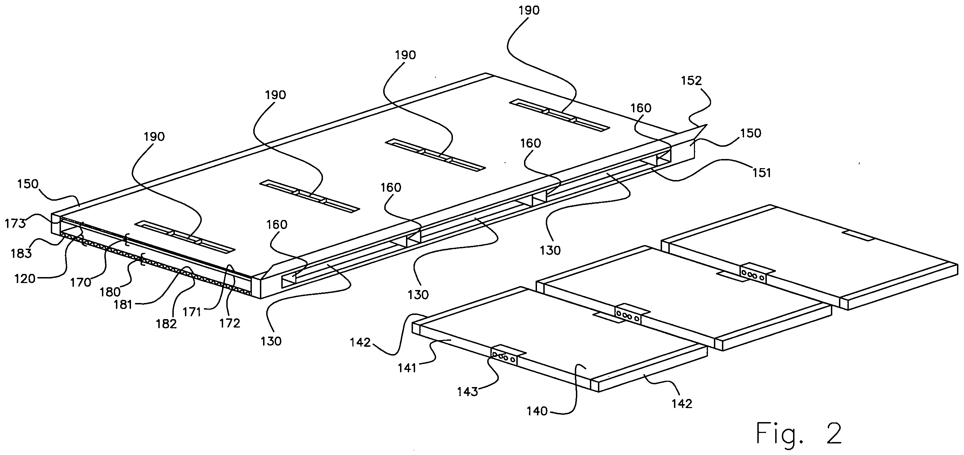

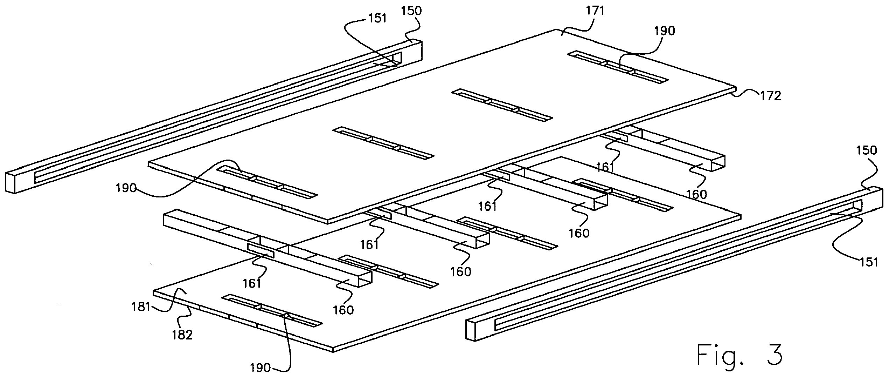

Eine erfindungsgemäße Boden-Vorrichtung 100 eines Fahrzeuges für den Personentransport ist aus einer Mehrzahl von Boden-Elementen 110 zusammengesetzt, die gemäß des in den Figuren 1 bis 3 dargestellten Bodenstrukturelementes 120 ausgebildet sind.

Ein Boden-Element 110 ist dabei als im Wesentlichen hohlquaderförmig geformtes robustes Bodenstrukturelement 120 ausgebildet, das strukturiert ist, um eine Mehrzahl von Einzelparzellen 130 zur positionsfixierten Aufnahme jeweils eines flachquaderförmig ausgebildeten Energiespeichermoduls 140 aufzuweisen.

Die Mehrzahl von Energiespeichermodulen 140 sind jeweils über eine seitliche Öffnung 151 reversibel in das Innere des Bodenstrukturelementes 120 einbringbar.

Ein Bodenstrukturelement 120 enthält zwei zueinander parallel angeordnete und in Längsrichtung des Fahrzeuges orientierte Langträger 150, die über eine Mehrzahl von zueinander parallel angeordneter und senkrecht zu den Langträgern 150 orientierter Querträger 160 miteinander verbunden sind.

Die Langträger 150 und Querträger 160 bilden eine robuste Rahmenkonstruktion, wobei die Querträger 160 beabstandet sind, um zwischen jeweils zwei benachbarten Querträgern 160 eine Parzelle 130 zur Aufnahme eines Energiespeichermoduls 140 auszubilden, und wobei in den Langträgern 150 schlitzartige Zugangsöffnungen 151 zum Einsetzen oder Herausnehmen jeweiliger Energiespeichermodule 140 ausgebildet sind.

Ein Energiespeichermodul 140 ist langschmal ausgebildet und weist zwei gegenüber den Seitenflächen 141 verkürzte Stirnflächen 142 auf, wobei in einem mittleren Bereich der jeweiligen Seitenflächen 141 jeweils ein elektrisches Kontaktelement 143 vorgesehen ist, das bei positionsfixierter Lage des Energiespeichermoduls 140 in einer Parzelle 130 an ein im mittleren Bereich eines Querträgers 160 angeordnetes, mit einem Stromkreislauf des Fahrzeuges verbundenes Querträger-Kontaktelement 161 angrenzt.

In einem jeweiligen Endbereich eines Querträgers 160 ist ein Hohlraum zum Anbringen eines Antriebs einer seitlichen Verschließklappe 152 zum reversiblen Verschließen einer schlitzartigen Zugangsöffnung 151 eines Langträgers 150 ausgebildet.

Die von den Lang- und Querträgern 150, 160 gebildete Rahmenkonstruktion ist mit einem Oberpaneel 170 und einem Unterpaneel 180 versehen, um einen eine Mehrzahl allseitig umschlossener Parzellen 130 aufweisenden Quasi-Hohlquader zu bilden, wobei sowohl in dem Oberpaneel 170 als auch in dem Unterpaneel 180 im Bereich der Querträger-Kontaktelemente 161 Aussparungen 190 zum Führen elektrischer Leitungen vorgesehen sind.

Ein Unterpaneel 180 enthält eine Oberplatte 181 und eine Unterplatte 182, die über eine Wabenkonstruktion 183 miteinander verbunden sind, wobei die Waben als parallel zu den Langträgern 150 ausgerichtete röhrenartige Hohlkammern zum Einbringen von Fluidleitungen zum Führen von Kühlflüssigkeit zum Kühlen der Energiespeichermodule 140 und zum Einbringen elektrischer Leiter ausgebildet sind.

Ein Oberpaneel 170 enthält ebenfalls eine Oberplatte 171 und eine Unterplatte 172, die über eine Wabenkonstruktion 173 miteinander verbunden sind, wobei die Waben der Oberplatte 170 als senkrecht zu den Hohlkammern des Unterpaneels 180 ausgerichtete röhrenartige Hohlkammern ausgebildet sind.

Ein Bodenstrukturelement 120 ist aus Aluminium in Aluminium-Strangpress-Profilbauweise hergestellt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Aus einer Mehrzahl von Boden-Elementen (110) zusammengesetzte Boden-Vorrichtung (100) eines Fahrzeuges für den Personentransport, wobei ein Boden-Element (110) als im Wesentlichen hohlquaderförmig geformtes robustes Bodenstrukturelement (120) ausgebildet ist, das strukturiert ist, um eine Mehrzahl von Einzelparzellen (130) zur positionsfixierten Aufnahme jeweils eines flachquaderförmig ausgebildeten Energiespeichermoduls (140) aufzuweisen, wobei die Mehrzahl von Energiespeichermodulen (140) jeweils über eine seitliche Öffnung (151) reversibel in das Innere des Bodenstrukturelementes (120) einbringbar sind, wobei das Bodenstrukturelement (120) zwei oder mehr zueinander parallel angeordnete und in Längsrichtung des Fahrzeuges orientierte Langträger (150) enthält, die über eine Mehrzahl von zueinander parallel angeordneter und senkrecht zu den Langträgern (150) orientierter Querträger (160) miteinander verbunden sind, wobei die Querträger (160) beabstandet sind, um zwischen jeweils zwei benachbarten Querträgern (160) eine Parzelle (130) zur Aufnahme eines Energiespeichermoduls (140) auszubilden, **dadurch gekennzeichnet, dass** die Langträger (150) und Querträger (160) eine robuste Rahmenkonstruktion bilden, und dass in den Langträgern (150) schlitzartige Zugangsöffnungen (151) zum Einsetzen oder Herausnehmen jeweiliger Energiespeicher-module (140) ausgebildet sind.

2. Vorrichtung nach Anspruch 1, **dadurch gekennzeichnet, dass** ein Energiespeichermodul (140) langschmal ausgebildet ist und zwei gegenüber den Seitenflächen (141) verkürzte Stirnflächen (142) aufweist, wobei in einem mittleren Bereich der jeweiligen Seitenflächen (141) jeweils ein elektrisches Kontaktelement (143) vorgesehen ist, das bei positionsfixierter Lage des Energiespeichermoduls (140) in einer Parzelle (130) an ein im mittleren Bereich eines Querträgers (160) angeordnetes, mit einem Stromkreislauf des Fahrzeuges verbundenes Querträger-Kontaktelement (161) angrenzt.

3. Vorrichtung nach den Ansprüche 1 und 2, **dadurch gekennzeichnet, dass** in einem jeweiligen Endbereich eines Querträgers (160) ein Hohlraum zum Anbringen eines Antriebs einer seitlichen Verschließklappe (152) zum reversiblen Verschließen einer schlitzartigen Zugangsöffnung (151) eines Langträgers (150) ausgebildet ist.

4. Vorrichtung nach den Ansprüchen 1 bis 3, **dadurch gekennzeichnet, dass** die von den Lang- und Querträgern (150, 160) gebildete Rahmenkonstruktion mit einem Oberpaneel (170) und einem Unterpaneel (180) versehen ist, um einen eine Mehrzahl allseitig umschlossener Parzellen (130) aufweisenden Quasi-Hohlquader zu bilden, wobei sowohl in dem Oberpaneel (170) als auch in dem Unterpaneel (180) im Bereich der Querträger-Kontaktelemente (161) Aussparungen (190) zum Führen elektrischer Leitungen vorgesehen sind.

5. Vorrichtung nach Anspruch 4, **dadurch gekennzeichnet, dass** ein Unterpaneel (180) eine Oberplatte (181) und eine Unterplatte (182) enthält, die über eine Wabenkonstruktion (183) miteinander verbunden sind.

6. Vorrichtung nach Anspruch 5, **dadurch gekennzeichnet, dass** die Waben als parallel zu den Langträgern (150) ausgerichtete röhrenartige Hohlkammern zum Einbringen von Fluidleitungen zum Führen von Kühlflüssigkeit zum Kühlen der Energiespeichermodule (140) und/oder zum Einbringen elektrischer Leiter ausgebildet sind.

7. Vorrichtung nach Anspruch 6, **dadurch gekennzeichnet, dass** ein Oberpaneel (170) ebenfalls eine Oberplatte (171) und eine Unterplatte (172) enthält, die über eine Wabenkonstruktion (173) miteinander verbunden sind, wobei die Waben der Oberplatte (171) als senkrecht zu den Hohlkammern des Unterpaneels (180) ausgerichtete röhrenartige Hohlkammern ausgebildet sind.

8. Vorrichtung nach einem der vorhergehenden Ansprüche, **dadurch gekennzeichnet, dass** ein Bodenstrukturelement (120) aus einem Metall, insbesondere Aluminium hergestellt ist.

9. Vorrichtung nach Anspruch 8, **dadurch gekennzeichnet, dass** ein Bodenstrukturelement (120) in Aluminium-Strangpress-Profilbauweise erstellt ist.

## Claims

1. Floor device (100) of a vehicle for passenger transport, said floor device being composed of a plurality of floor elements (110), wherein a floor element (110) is designed as a robust floor structural element (120) which is of substantially hollow-cuboidal shape and is structured in order to have a plurality of individual cells (130) for the positionally fixed receiving of one energy storage module (140) of flat cuboidal design each, wherein the plurality of energy storage modules (140) are each introducible reversibly into the interior of the floor structural element (120) via a lateral opening (151), wherein the floor structural element (120) contains two or more longitudinal members (150) which are arranged parallel to one another and are oriented in the longitudinal direction of the vehicle and are connected to one another via a plurality of crossmembers (160), which are arranged parallel to one another and are oriented perpendicularly to the longitudinal members (150), wherein the crossmembers (160) are spaced apart in order, between every two adjacent crossmembers (160), to form a cell (130) for receiving an energy storage module (140), **characterized in that** the longitudinal members (150) and crossmembers (160) form a robust frame construction, and **in that** slot-like access openings (151) for the insertion or removal of respective energy storage modules (140) are formed in the longitudinal members (150).

2. Device according to Claim 1, **characterized in that** an energy storage module (140) is of long and narrow design and has two end surfaces (142) which are shortened in relation to the side surfaces (141), wherein a respective electrical contact element (143) is provided in a central region of the respective side surfaces (141), said contact element, in a positionally fixed position of the energy storage module (140) in a cell (130), being adjacent to a crossmember contact element (161) which is arranged in the central region of a crossmember (160) and is connected to a power circuit of the vehicle.

3. Device according to Claims 1 and 2, **characterized in that** a cavity for the mounting of a drive of a lateral closing flap (152) for the reversible closing of a slot-like access opening (151) in a longitudinal member (150) is formed in a respective end region of a crossmember (160).

4. Device according to Claims 1 to 3, **characterized in that** the frame construction formed by the longitudinal members and crossmembers (150, 160) is provided with an upper panel (170) and a lower panel (180) in order to form a virtual hollow cuboid having a plurality of cells (130) enclosed on all sides, wherein cutouts (190) for the guiding of electric lines are provided both in the upper panel (170) and in the lower panel (180) in the region of the crossmember contact elements (161).

5. Device according to Claim 4, **characterized in that** a lower panel (180) contains an upper plate (181) and a lower plate (182) which are connected to each other via a honeycomb construction (183).

6. Device according to Claim 5, **characterized in that** the honeycombs are designed as tube-like hollow chambers, which are oriented parallel to the longitudinal members (150), for the introduction of fluid lines for guiding cooling fluid for cooling the energy storage modules (140) and/or for the introduction of electric conductors.

7. Device according to Claim 6, **characterized in that** an upper panel (170) likewise contains an upper plate (171) and a lower plate (172) which are connected to each other via a honeycomb construction (173), wherein the honeycombs of the upper plate (171) are designed as tube-like hollow chambers which are oriented perpendicular to the hollow chambers of the lower panel (180).

8. Device according to one of the preceding claims, **characterized in that** a floor structural element (120) is produced from a metal, in particular aluminium.

9. Device according to Claim 8, **characterized in that** a floor structural element (120) is prepared in a design in the form of an aluminium extruded profile.

## Revendications

1. Dispositif de plancher (100) d'un véhicule pour le transport de personnes, composé d'une pluralité d'éléments de plancher (110), un élément de plancher (110) étant réalisé pour l'essentiel sous la forme d'un élément de structure de plancher (120) robuste en forme de parallélépipède rectangle creux structuré pour comporter une pluralité de parcelles individuelles (130) pour recevoir de façon fixement positionnée respectivement un module d'accumulateur d'énergie (140) réalisé en forme de parallélépipède rectangle plat, la pluralité de modules d'accumulateur d'énergie (140) pouvant respectivement être amenés, via une ouverture latérale (151), de façon réversible dans l'intérieur de l'élément de structure de plancher (120), l'élément de structure de plancher (120) contenant deux supports longitudinaux (150) ou davantage disposés parallèlement les uns par rapport aux autres et orientés dans la direction longitudinale du véhicule, ces supports étant reliés entre eux via une pluralité de supports transversaux (160) disposés parallèlement les uns par rapport aux autres et orientés perpendiculairement aux supports longitudinaux (150), les supports transversaux (160) étant espacés pour former entre respectivement deux supports transversaux (160) connexes une parcelle (130) pour recevoir un module d'accumulateur d'énergie (140), **caractérisé en ce que** les supports longitudinaux (150) et les supports transversaux (160) forment une construction de cadre robuste et que des ouvertures d'accès (151) de type fente sont réalisées dans les supports longitudinaux (150) pour insérer ou extraire les modules d'accumulateur d'énergie (140) respectifs.

2. Dispositif selon la revendication 1, **caractérisé en ce qu'**un module d'accumulateur d'énergie (140) est réalisé de façon longue et étroite et comporte deux surfaces avant (142) raccourcies par rapport aux surfaces latérales (141), un élément de contact (143) électrique étant respectivement prévu dans une zone centrale des surfaces latérales (141) respectives, cet élément étant connexe, en cas de position fixement positionnée du module d'accumulateur d'énergie (140) dans une parcelle (130), à un élément de contact de support transversal (161) disposé dans la zone centrale d'un support transversal (160) et relié à un circuit de courant du véhicule.

3. Dispositif selon les revendications 1 et 2, **caractérisé en ce qu'**un espace creux est réalisé dans une zone d'extrémité respective d'un support transversal (160), pour amener un entraînement d'un clapet de fermeture (152) latéral à fermer de façon réversible une ouverture d'accès (151) de type fente d'un support longitudinal (150).

4. Dispositif selon les revendications 1 à 3, **caractérisé en ce que** la construction de cadre formée par les supports longitudinaux et transversaux (150, 160) est pourvue d'un panneau supérieur (170) et d'un panneau inférieur (180), pour former un parallélépipède rectangle quasi creux comportant une pluralité de parcelles (130) entourées de tous les côtés, des évidements (190) étant prévus tant dans le panneau supérieur (170) que dans le panneau inférieur (180) dans la zone des éléments de contact de supports transversaux (161) pour guider les conduites électriques.

5. Dispositif selon la revendication 4, **caractérisé en ce qu'**un panneau inférieur (180) contient une plaque supérieure (181) et une plaque inférieure (182) reliées entre elles par une construction alvéolaire (183).

6. Dispositif selon la revendication 5, **caractérisé en ce que** les alvéoles sont réalisées sous la forme de caissons creux de type tubes orientés parallèlement aux supports longitudinaux (150) pour amener des conduites de fluide permettant d'introduire du fluide de refroidissement en vue de refroidir les modules d'accumulateur d'énergie (140) et/ou amener des lignes électriques.

7. Dispositif selon la revendication 6, **caractérisé en ce qu'**un panneau supérieur (170) contient également une plaque supérieure (171) et une plaque inférieure (172) reliées entre elles par une construction alvéolaire (173), les alvéoles de la plaque supérieure (171) étant réalisées sous la forme de caissons creux de type tubes orientés perpendiculairement aux caissons creux (180) du panneau inférieur.

8. Dispositif selon l'une quelconque des revendications précédentes, **caractérisé en ce qu'**un élément de structure de plancher (120) est fabriqué à partir d'un métal, notamment en aluminium.

9. Dispositif selon la revendication 8, **caractérisé en ce qu'**un élément de structure de plancher (120) est fabriqué à la façon d'un profilé extrudé en aluminium.
